# EUROPÄISCHE PATENTSCHRIFT

(11) **EP 1 034 584 B1**
(45) Veröffentlichungstag und Bekanntmachung des Hinweises auf die Patenterteilung: **22.08.2001**
(21) Anmeldenummer: 98949819.1
(22) Anmeldetag: 22.10.1998
(51) Int. Cl.: H01S 3/02, H01S 3/042

(54) **KÜHLVORRICHTUNG FÜR EINEN OPTISCHEN KRISTALL BZW. LASERKRISTALL**
COOLING DEVICE FOR AN OPTICAL CRYSTAL OR LASER CRYSTAL
DISPOSITIF DE REFROIDISSEMENT POUR UN CRISTAL OPTIQUE OU UN CRISTAL LASER

(30) Priorität: 24.11.1997 AT 199297
(43) Veröffentlichungstag der Anmeldung: 13.09.2000
(73) Patentinhaber: Femtolasers Produktions GmbH, 2100 Korneuburg (AT)
(72) Erfinder: STINGL, Andreas, A-2100 Korneuburg (AT); KRAUSZ, Ferenc, A-2100 Korneuburg (AT)
(74) Vertreter: Weinzinger, Arnulf, Dipl.-Ing.
(86) Internationale Anmeldenummer: AT9800256
(87) Internationale Veröffentlichungsnummer: WO9927621

(56) Entgegenhaltungen:
- DE-A- 4 229 500
- PATENT ABSTRACTS OF JAPAN vol. 009, no. 056 (E-302), 12. März 1985 & JP 59 197186 A (CANON KK), 8. November 1984
- PATENT ABSTRACTS OF JAPAN vol. 014, no. 411 (E-0973), 5. September 1990 & JP 02 156583 A (ASAHI GLASS CO LTD), 15. Juni 1990
- PATENT ABSTRACTS OF JAPAN vol. 095, no. 003, 28. April 1995 & JP 06 338569 A (MITSUBISHI ELECTRIC CORP), 6. Dezember 1994

## Beschreibung

Die Erfindung betrifft eine Kühlvorrichtung mit Peltierelementen für einen thermisch hoch belasteten optischen Kristall bzw. Laserkristall, von dem Laserstrahlen, insbesondere Laserpulse, erhalten werden, z.B. für den Laserkristall eines optischen Verstärkers oder Oszillators.

Eine wirksame Kühlung von optischen Kristallen bzw. Laserkristallen, nachstehend auch kurz "Kristallen", in Laservorrichtungen ist dann von besonderer Bedeutung, wenn die Kristalle, z.B. Titan-Saphir-Kristalle (üblicherweise Ti:S-Laserkristalle bezeichnet), im Betrieb hohen Wärmebelastungen ausgesetzt werden. Dies ist beispielsweise dann der Fall, wenn in einer Kurzpuls-Laservorrichtung (Oszillator) mit passiver Modenverkopplung der Kristall als optische Nichtlinearität genützt wird und der Pumpstrahl und der Resonatorstrahl möglichst stark im Kristall fokussiert werden; der Kristall soll dabei, um die Materialdispersion niedrig zu halten, kleine Abmessungen und zum Ausgleich eine hohe Dotierung haben, wodurch die - spezifische - Wärmebelastung steigt, wie dies in der nicht vorveröffentlichten älteren Anmeldung WO-98/10 494-A dargelegt ist. Dort ist auch dargelegt, daß eine Kühlung auf unter 10°C wegen der dann auftretenden Feuchte-Kondensation problematisch ist, wobei auf dem Kristall kondensierte Tröpfchen zu einer raschen Beschädigung oder sogar Zerstörung des Kristalls führen können.

Von ganz besonderer Bedeutung ist ferner die Kühlung des Kristalls im Falle eines optischen Verstärkers, wie dies auch bereits in Optics Letters Vol. 22, Nr.16, 15. August 1997, S. 1256-1258, "0.2-TW laser system at 1 kHz" von Backus et al. ausgeführt wird. Bei einer solchen optischen Nachverstärkung von Oszillatorpulsen wird beispielsweise ebenfalls ein Ti:S-Laserkristall verwendet, in dem die Pulse aus dem Oszillator von einer Energie von einigen nJ auf eine Energie in der Größenordnung von 1 mJ (also um den Faktor 10⁶) verstärkt werden. Zu diesem Zweck wird der Ti:S-Verstärkerkristall mit grünem Laserlicht "gepumpt", das z.B. eine Durchschnittsleistung von 10 bis 20 W hat, was ein Mehrfaches der Pumpleistung bei der Laserpulserzeugung im Oszillator ist. Auch ist dadurch, daß der optische Verstärker gepulst betrieben wird (z.B. beträgt die Pulsfrequenz ca. 1 kHz), die Pumpenergie auf einzelne Pulse konzentriert, die die Oszillatorpulse verstärken. Zufolge der dabei auftretenden sehr hohen Leistungen ist es daher wichtig, eine ausreichende Kühlung für den Kristall zu erzielen. Bei einer unzureichenden Kühlung des Kristalls ergibt sich nicht nur eine schlechte Effizienz ähnlich wie beim Oszillator, sondern auch ein ungünstiges Strahlprofil aufgrund des Effekts der "thermischen Linse", der auch im erwähnten Artikel von Backus et al. erläutert wird. Im Falle der Erwärmung des Kristalls bewirkt der dadurch in seinem Material erhaltene Temperaturgradient einen Brechungsindexgradienten, der den Laserstrahl beim Durchlaufen - je nach Kristall-Material - ungewollt fokussiert oder defokussiert. Durch eine gute Kühlung des Kristalls wird die thermische Leitfähigkeit des Kristall-Materials höher, und der Temperaturkoeffizient des Brechungsindex (der den Effekt der "thermischen Linse" bewirkt) wird bei den niedrigen Temperaturen kleiner, so daß ein Strahlprofil annähernd entsprechend dem idealen Gauß'schen Intensitätsprofil (über den Querschnitt) erzielt wird; auch wird dann der Wirkungsgrad verbessert. Gemäß dem Artikel von Backus et al. wird flüssiger Stickstoff zur Kühlung des Kristalls verwendet, wodurch zwar außerordentlich niedrige Temperaturen erzielt werden können, jedoch eine praktikable Ausführung des optischen Verstärkers für verschiedenste Einsatzzwecke, wie insbesondere für mobile Einsätze, verhindert wird.

Ein etwas anderer optischer Verstärker ist im Artikel "Generation of 0.1-TW 5-fs optical pulses at a 1-kHz repetition rate" von S. Sartania et al., Optics letters Vol.22, Nr. 20, 15. Oktober 1997, beschrieben, wobei dort nur allgemein erwähnt wird, daß zur Kühlung des Verstärkerkristalls ein Peltierkühler verwendet wird. Damit bleibt jedoch das Problem, daß sich bei einem intensiven Kühlen am Kristall nicht nur Kondenswasser, sondern sogar Eis bildet, und daß Verunreinigungen in der Luft vorhanden sind, die sich am Kristall festsetzen; diese Eisbildungen und Verunreinigungen führen im Betrieb zur - lokalen - Zerstörung der Kristalloberfläche durch Einbrennen.

Schließlich ist aus der DE 42 29 500 A ein Festkörper-Lasersystem mit einem Gehäuse bekannt, in dessen Innerem zwei unabhängige Peltier-Kühlelemente angebracht sind, um eine Laserdiode bzw. einen Laserkristall zu kühlen. Im Einzelnen ist jedoch hier eine Temperaturregelung betroffen, wozu auch Temperatursensoren eingebaut sind.

Es ist nun Ziel der Erfindung, hier Abhilfe zu schaffen und eine Kühlvorrichtung der eingangs angeführten Art vorzusehen, mit der einerseits trotz einfacher, insbesondere für mobile Anwendungen, geeigneten Konstruktion eine gute Kühlung im Hinblick auf einen hohen Wirkungsgrad und ein optimales Strahlprofil erzielt wird, und mit der andererseits durch Vermeidung von Einbrennen von Kondenswasser (Eis) bzw. Verunreinigungen eine lange Lebensdauer des Laserkristalls sichergestellt wird.

Die erfindungsgemäße Kühlvorrichtung der eingangs angeführten Art ist dadurch gekennzeichnet, daß der Kristall zusammen mit den zu seiner Kühlung vorgesehenen Peltierelementen in einem gekapselten Behälter untergebracht ist, daß das Innere des Behälters evakuiert und/oder mittels einer Trocknungssubstanz trocken gehalten ist, und daß der Behälter zumindest ein Brewster-Fenster für den Durchtritt der Laserstrahlen aufweist, das unter einem Winkel entsprechend dem Brewsterwinkel relativ zur optischen Achse angebracht ist.

Durch das Kapseln des Behälters ist es möglich, das Behälterinnere zu evakuieren oder aber trocken zu halten, so daß sich kein Kondenswasser am optischen Kristall bzw. Laserkristall absetzen kann; weiters wird hier eine definierte, saubere Umgebung (Vakuum oder reine, d.h von Verunreinigungen freie, trockene Luft) für den Kristall ermöglicht. Demgemäß können lange Betriebszeiten erzielt werden, was auch im Hinblick auf den beim Einbau und bei der genauen Justierung von optischen Kristallen bzw. Laserkristallen erforderlichen Aufwand ein bedeutender Vortoil ist. Sodann zeichnet sich die vorliegende Kühlvorrichtung dadurch aus, daß sie wegen der Verwendung der thermoelektrischen Kühlelemente, d.h. Peltierelemente, in Verbindung mit dem gekapselten Behälter einen kompakten, einfachen, handlichen Aufbau der Laservorrichtung ermöglicht, wobei überdies die Verwendung in Fahrzeugen, z.B. auch in Flugzeugen, problemlos möglich ist, da sie im Betrieb Schwerkraft-unabhängig ist, im Gegensatz zu einer Kühlung mit flüssigem Stickstoff. Der Behälter kann dabei mit einem dicht verschließbarem Anschluß für ein Evakuieren sowie mit dichten elektrischen Leitungsdurchführungen für die Stromversorgung der Peltierelemente versehen sein.

Für den Durchtritt der Laserstrahlen sind weiters im Hinblick auf die hohen Intensitäten, die bei den hier in Rede stehenden Anwendungen auftreten, sogenannte Brewster-Fenster am Behälter vorgesehen. Dadurch können ungewollte Reflexionen verhindert werden, und zwar ohne die sonst hierfür eingesetzten Breitband-Antireflexbeschichtungen; derartige dielektrische Beschichtungen würden nämlich den genannten hohen Intensitäten (z.B. Spitzenleistungen im MW- bis GW-Bereich bei Strahldurchmessern von < 10 mm und bei Pulsdauern im 10fs- bis ps-Bereich, ausgehend von einer Durchschnittsleistung von 100 mW bis zum Wattbereich; Pumpparameter: Durchschnittsleistung einige W bis einige 10 W, Pumpenergie einige mJ; hohe Wiederholfrequenzen im kHz-Bereich, was zu Spitzenleistungen im kM- bis MW-Bereich führt) nicht standhalten.

Es sei noch erwähnt, daß es bei Halbleiterlasern bekannt ist, vgl. z.B. DE 33 07 933 C, DE 39 22 800 A, JP 1-122 183 A oder EP 259 888 A, gekapselte Module zu verwenden, in denen ein Laserdiodenelement in Verbindung mit einem Peltierelement vorliegt. Dabei sind jedoch keine hohen Laserleistungen und damit auch nur niedrige thermische Belastungen der Laserdiodenelemente gegeben, und die Peltierelemente werden hier tatsächlich zur Temperaturstabilisierung eingesetzt. Dies ist bei den bekannten Halbleiterlasern deshalb von Bedeutung, weil im Fall von Laserdioden die Laser-Wellenlänge wesentlich von der Temperatur des Halbleiterchips abhängt, wobei vielfach auch dessen Erwärmung notwendig ist, um die richtige Wellenlänge zu erhalten. Im übrigen ist bei diesen bekannten Einrichtungen eine Evakuierung des Moduls bzw. dessen Trocknung mittels Trocknungssubstanzen nicht angesprochen.

Mit den Peltierelementen kann in den meisten Fällen ohne Schwierigkeiten eine ausreichende Kühlung des Laserkristalls erzielt werden, wobei sich gezeigt hat, daß eine Temperaturdifferenz von ca. 50°C oder 70°C an den Peltierelementen zumeist genügt. Für eine besonders starke Kühlung bzw. Wärmeableitung vom Laserkristall kann es auch vorteilhaft sein, wenn die Peltierelemente gestapelt vorgesehen sind. Dabei können Temperaturwerte von -50°C oder -100°C auf der kalten Seite, bei einer Umgebungstemperatur (ca. 20°C) auf der warmen Seite, ohne weiters erreicht werden. An sich sind Temperaturdifferenzen an den Peltierelementen bis zu 130°C, bei Einsatz herkömmlicher Peltierelemente, möglich, so daß bis auf Temperaturen tiefer als -100°C gekühlt werden kann.

Der optische Kristall bzw. Laserkristall kann plättchenförmig und - im Hinblick auf die erzielbare gute Kühlung - vergleichsweise klein dimensioniert werden und auch im Fall der Anwendung in einen Verstärker beispielsweise Abmessungen von nur ca. 3 mm in der Breite und Länge, mit einer Höhe von bloß 1 bis 1,5 mm, aufweisen.

Für die Fixierung des Kristalls unter Sicherstellung eines guten Wärmeüberganges und einer guten Wärmeableitung ist es auch von Vorteil, wenn der Kristall zwischen gut wärmeleitenden Kühlbacken gehalten ist, an denen die Peltierelemente anliegen. Hierbei ist es zur Erzielung einer möglichst großen Wärmeübergangsfläche sowie einer besonders einfachen Halterung des Kristalls überdies günstig, wenn die Kühlbacken den Kristall an vier Seiten formschlüssig umgreifen und festhalten. Eine hinsichtlich Herstellung und Montage günstige Lösung wird hier weiters erzielt, wenn eine von zwei an gegenüberliegenden Seiten am Kristall anliegenden Kühlbacken einen den auf der anderen Kühlbacke aufliegenden Kristall übergreifenden Nasenfortsatz aufweist und die Kühlbacken in Laserstrahlrichtung vor bzw. hinter dem Kristall mit Vertiefungen für den Durchlaß der Laserstrahlen versehen sind.

Um die Peltierelemente an ihrer "warmen" Seite auf Umgebungstemperatur (oder sogar darunter) zu halten, ist es ferner von Vorteil, wenn die Peltierelemente an der von den Kühlbacken abgewandten warmen Seite an einem Kühlsockel anliegen. Dabei hat es sich für eine effiziente Kühlung der warmen Seite der Peltierelemente auch als vorteilhaft erwiesen, wenn der Kühlsockel flüssigkeitsgekühlt ist. Der Kühlsockel kann dabei die verschiedensten Formen haben, wie z.B. eine Quaderform oder Scheibenform. Für die Erzielung einer hohen Kälte-Speicherkapazität sowie für eine stabile Unterbringung der Peltierelemente und der Kühlbacken und für eine einfache Fertigung ist es weiters günstig, wenn der Kühlsockel durch einen allgemein zylindrischen Körper mit einem allgemein V-förmigen Einschnitt an einer Stirnseite gebildet ist, der die Peltierelemente sowie die Kühlbacken mit dem Kristall aufnimmt. Dabei ist es aus Bearbeitungsgründen, auch hinsichtlich der Anlagefläche der Peltierelemente und Kühlbacken, von Vorteil, wenn der V-förmige Einschnitt einen Scheitelwinkel von 90° aufweist. Für die Ausrichtung der Peltierelemente und als Montageerleichterung ist es überdies vorteilhaft, wenn der allgemein V-förmige Einschnitt schräge Auflageflächen für die Peltierelemente definiert und an den inneren, einander benachbarten Enden der Auflageflächen von diesen hochstehende Anschläge für die Peltierelemente vorgesehen sind.

Eine besonders einfache Ausbildung des gekapselten Behälters, die eine gute Abdichtung z.B. mit O-Ringen ermöglicht, kann erhalten werden, wenn der Behälter ein mit einem Deckel verschlossenes Rohrgehäuse aufweist. Hierbei ist es weiters vorteilhaft, wenn der Kühlsockel an seiner von den Peltierelementen abgewandten Stirnseite mit einem Flansch versehen ist, mit dem das Rohrgehäuse dicht verbunden ist. Auch ist es günstig, wenn der Kühlsockel im Bereich des Flansches mit Bohrungen für den Durchfluß der Kühlflüssigkeit versehen ist.

Damit die Laserstrahlen beim Durchtritt durch die Fenster eine auf die Flächeneinheit ihres Querschnitts bezogene geringe Leistung haben (und so kein Einbrennen oder Zerstören der Fenster nach kurzen Betriebszeiten verursachen), sollten die Laserstrahlen an der Stelle der Fenster einen möglichst großen Querschnitt haben, d.h. außer Fokus sein, was bedeutet, daß für die Fenster ein bestimmter Abstand (z.B. ca. 8 bis 10 cm) zum Kristall - wo Fokussierung vorliegt - eingehalten werden sollte. Um dies ohne Vergrößerung des gesamten Behälters zu ermöglichen, ist es auch günstig, wenn der gekapselte Behälter, vorzugsweise an einander gegenüberliegenden Seiten, mit (je) einem von ihm abstehenden, dicht angebrachten Rohrstutzen versehen ist, der an seinem äußeren Ende mit dem Fenster für den Durchtritt der Laserstrahlen abgeschlossen ist.

Die Erfindung betrifft auch eine Laservorrichtung mit einer Kühlvorrichtung wie vorstehend dargelegt.

Die Erfindung wird nachstehend anhand eines in der Zeichnung dargestellten bevorzugten Ausführungsbeispieles, auf das sie jedoch nicht beschränkt sein soll, noch weiter erläutert. Im einzelnen zeigen:
Fig.1 ein Schema der wesentlichen Teile eines optischen Verstärkers;
Fig.2 eine aufgeschnittene Draufsicht auf eine Kühlvorrichtung für den bei einem solchen optischen Verstärker verwendeten Laserkristall;
Fig.3 einen axialen Schnitt durch diese Kühlvorrichtung, gemäß der Linie III-III in Fig.2;
Fig.4 eine Draufsicht auf einen bei dieser Kühlvorrichtung verwendeten Montage- und Kühlsockel;
Fig.5 eine Ansicht dieses Kühlsockels, im Bereich des unteren Flanschteiles teilweise aufgeschnitten;
Fig.6 einen Querschnitt durch den Flanschbereich dieses Kühlsockels, gemäß der Linie VI-VI in Fig.5;
Fig.7 eine der bei der Kühlvorrichtung gemäß Fig.2 und 3 verwendeten Kühlbacken für den Laserkristall in einer Draufsicht (Fig.7a), Vorderansicht (Fig.7b) und Stirnansicht (Fig.7c);
Fig.8 die andere der bei der Kühlvorrichtung gemäß Fig.2 und 3 verwendeten Kühlbacken, ebenfalls in einer Draufsicht (Fig.8a), Vorderansicht (Fig.8b) und Stirnansicht (Fig.8c); und
Fig.9 in einer Detailansicht in größerem Maßstab die Einspannung des Laserkristalls zwischen den Kühlbacken gemäß Fig.7 und 8 unter Zwischenlage von Indiumfolien.

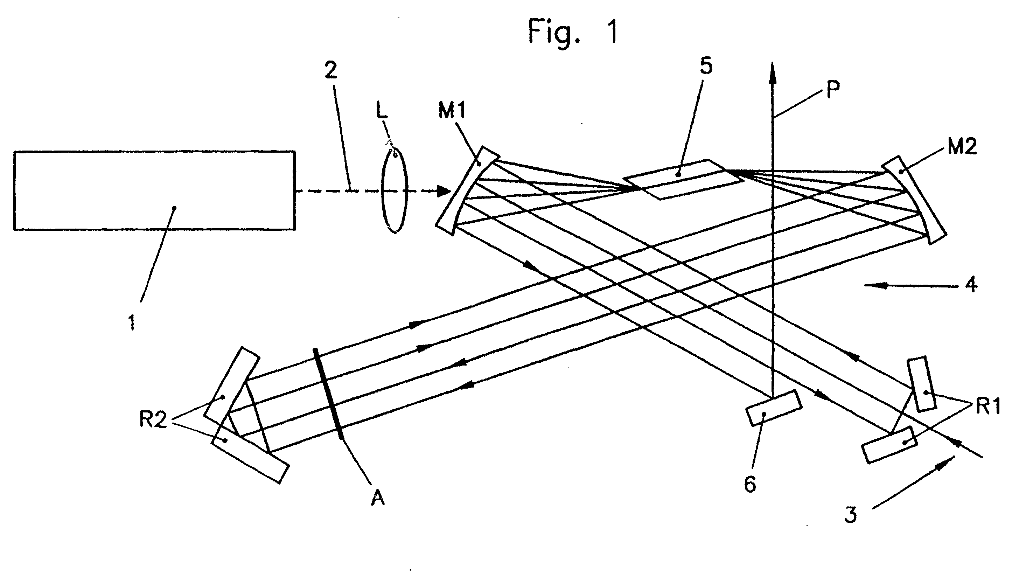

Die erfindungsgemäße Kühlvorrichtung wird nachstehend beispielhaft in Zusammenhang mit einem optischen Verstärker, wie er schematisch in Fig.1 in seinen wesentlichen Teilen angedeutet ist, näher beschrieben; selbstverständlich kann die Kühlvorrichtung, wenngleich sie aufgrund der effizienten Kühlung besondere Vorteile bei optischen Verstärkers bringt, aber auch bei anderen Laservorrichtungen, z.B. bei Oszillatoren, angewendet werden. Auch sind die nachstehend angegebenen Materialien für den optischen Kristall bzw. Laserkristall (Titan-Saphir-Kristall) ebenso wie für die Ausbildung des Pumplasers (frequenzverdoppelter Nd:YLF-Laser-Neodym-Yttrium-Lithium-Fluorid-Laser) nur als Beispiel zu verstehen.

In Fig.1 ist schematisch eine Anordnung der wesentlichen Komponenten eines optischen Verstärkers gezeigt, wobei im dargestellten Beispiel der optische Verstärker als sog. "Multipass-Verstärker" veranschaulicht ist, vgl. auch den bereits erwähnten Aufsatz von Backus et al. "0.2-TW laser system at 1 kHz". Selbstverständlich könnte die Erfindung aber auch bei anderen optischen Verstärkern, nämlich insbesondere bei den sog. regenerativen Verstärkern, eingesetzt werden, wo ein mehrmaliger kolinearer Durchlauf des Laserstrahles erfolgt, bevor er, z.B. mit Hilfe von Pockelszellen, den Verstärker verläßt.

Im einzelnen ist in Fig.1 schematisch bei 1 ein Pumplaser, z.B. ein frequenzverdoppelter Nd-YLF-Laser, gezeigt, der einen Laserstrahl, den sog. Pumpstrahl, abgibt, welcher schematisch in Fig.1 bei 2 angedeutet ist, und welcher die Energie für die Verstärkung von Laserpulsen liefert. Diese Laserpulse werden bei 3 von einem nicht näher gezeigten, an sich herkömmlichen Laseroszillator der allgemein mit 4 bezeichneten eigentlichen Verstärkeranordnung zugeführt. Wesentliches Element dieser Verstärkeranordnung 4 ist ein in Fig.1 ebenfalls nur ganz schematisch und ohne Kühlvorrichtung gezeigter optischer Kristall bzw. Laserkristall 5, nachstehend kurz Kristall genannt, beispielsweise ein Ti:S- Kristall, in dem die Laserstrahlen bei den durch verschiedene Linien mit entsprechenden Pfeilen angegebenen verschiedenen Durchläufen fokussiert werden. Insbesondere sind zwei Fokussierungsspiegel M1, M2 für den Verstärkerstrahl beidseits des Kristalls 5 vorgesehen, wobei zumindest der Fokussierungsspiegel M1 halbdurchlässig ist, um den Pumpstrahl 2, der von einer Fokussierungslinse L1 herkommt, zum Kristall 5 durchzulassen. Weiters sind in Fig.1 bei R1 und R2 noch Retroreflektoren für den Verstärkerstrahl gezeigt, welche für die verschiedenen Multipass-Positionen des Laserstrahls im Raum sorgen, wobei die Retroreflektoren R1 überdies in einem vorbestimmten Abstand voneinander angebracht sind, damit die vom Oszillator kommenden Laserpulse dort durch den so gebildeten Spalt in die Verstärkeranordnung 4 eintreten können. Sodann ist vor den Retroreflektoren R2 eine Blende A mit z.B. einer 4-, 6- oder 8-Loch-Apertur zur Unterdrückung von Lasertätigkeit im Verstärker 4 angeordnet, und zum Auskoppeln der verstärkten Laserpulse ist ein Spiegel 6 vorgesehen. Die verstärkten Laserpulse P können beispielsweise einem Kompressor zugeführt werden, wie dies an sich bekannt und daher nicht näher dargestellt ist, wobei in diesem Kompressor die Laserpulse in ihrer Dauer verkürzt werden.

Zur optischen Verstärkung wird ein Pumplaser 1 verwendet, der beispielsweise Pulse mit einer Frequenz von ungefähr 1 kHz, mit einer Durchschnittsleistung von 10 bis 20 W, erzeugt. Da die zu verstärkenden Laserpulse vom Oszillator mit einer um Größenordnungen höheren Frequenz ankommen, wird üblicherweise in Verbindung mit der Verstärkeranordnung 4 auch eine Anordnung, etwa mit Pockelszellen, zur Unterdrückung der nicht-verstärkten Pulse eingesetzt, was aber in Fig.1 nicht näher veranschaulicht ist. Zur weiteren Information hierüber kann aber auf den bereits erwähnten Artikel von Sartania et al. "Generation of 0.1-TW 5-fs optical pulses at a 1-kHz repetition rate" oder auf den Artikel von Backus et al. "0.2-TW laser system at 1 kHz" verwiesen werden. Zum leichteren Verständnis sei hier nur noch angeführt, daß beispielsweise die Laserpulse, die vom Oszillator kommen, eine Frequenz von 75 MHz haben, und daß dann nur jeder 75.000ste Puls durchgelassen und mit Energie - die vom Pumplaser kommt - angereichert wird.

Im Hinblick auf die hohen Leistungen, die die Pumppulse aufweisen, sowie auch im Hinblick auf die Fokussierung dieser Pumppulse in einem relativ kleinen Kristall-Volumen kommt es dort zu einer entsprechenden Wärmeentwicklung, so daß einer effizienten Kühlung des Kristalls eine hohe Bedeutung zukommt. Dabei ist jedoch im Hinblick auf industrielle Anwendungen des Verstärkers oder allgemein der Lasereinrichtung eine Kühlung mit flüssigem Stickstoff, wie bei der bekannten Anordnung, unzweckmäßig und unhandlich und überdies von der Schwerkraft abhängig, so daß sich eine derartige Kühlvorrichtung nicht für mobile Einsatzzwecke eignet.

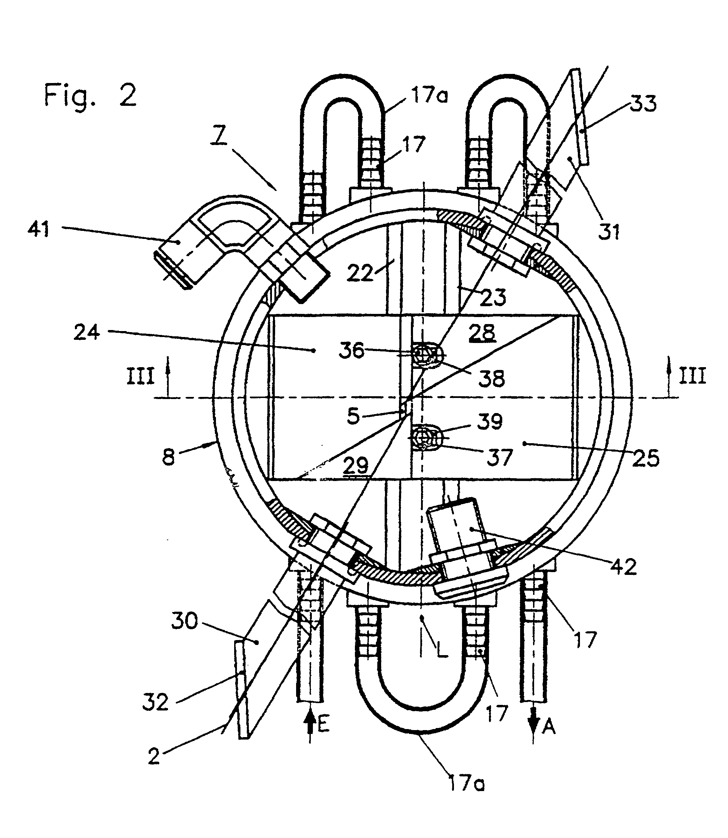

Anhand der Fig.2 bis 9 wird nun eine allgemein mit 7 bezeichnete Kühlvorrichtung erläutert, die den gestellten Anforderungen, wie ausreichende Kühlung, kompakter, einfacher, handlicher Aufbau. Unabhängigkeit von der Schwerkraft usw., Rechnung trägt, und die sich überdies dadurch auszeichnet, daß lange Betriebszeiten für die Kristalle erzielt werden können.

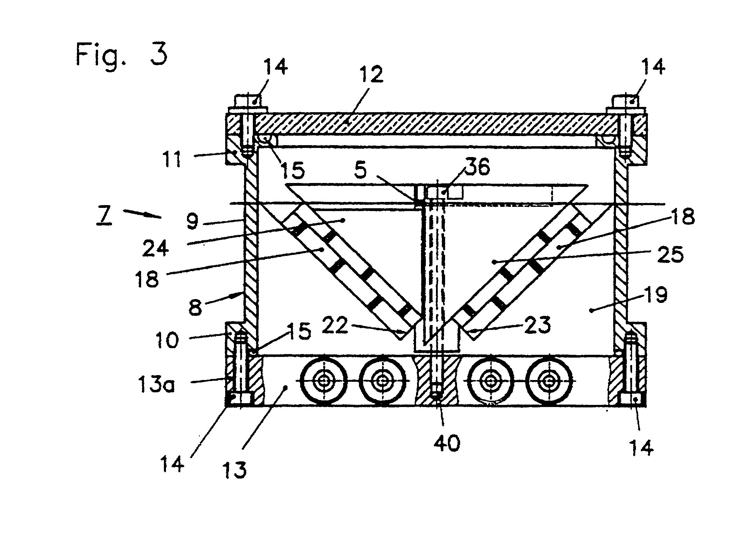

Die Kühlvorrichtung 7 umfaßt, wie den Fig.2 und 3 zu entnehmen ist, einen gekapselten, dicht abgeschlossenen Behälter 8, der ein Rohrgehäuse 9 mit endseitigen Flanschen 10, 11 aufweist, an welchen ein Deckel 12 und ein Kühlsockel 13 über einen Flansch 13a mittels Schrauben 14 befestigt sind, wobei zusätzlich O-Dichtungsringe 15 aus Gummi oder elastischem Kunststoff zwischen den Flanschen 10, 11 einerseits und dem Deckel 12 bzw. dem Kühlsockel 13 andererseits vorgesehen sind.

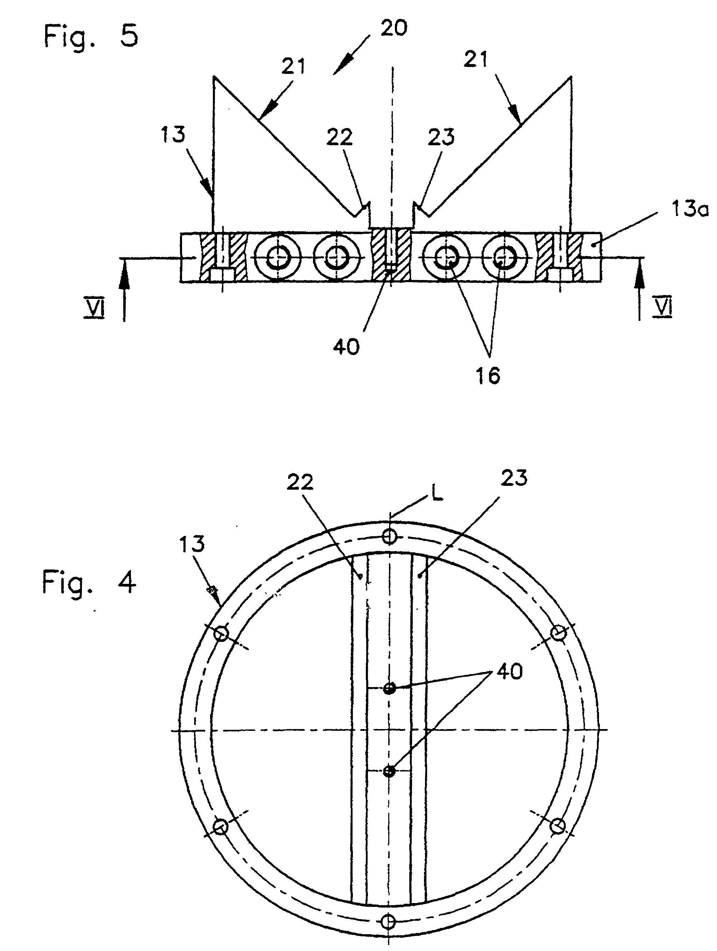

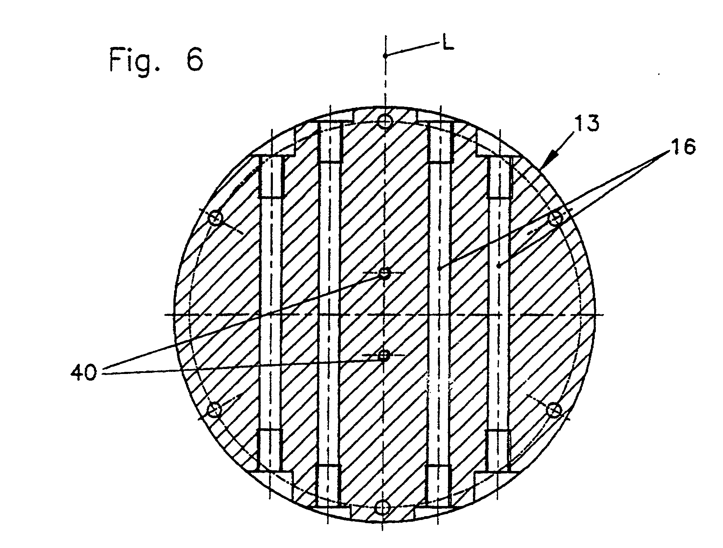

Wie insbesondere aus den Fig.5 und 6 ersichtlich ist, weist der Kühlsockel 13 vier zueinander parallele Bohrungen 16 für den Durchfluß einer Kühlflüssigkeit, z.B. Wasser, auf, wobei in den Enden der Bohrungen 16 Anschlußnippel 17 (vgl. Fig.2) eingeschraubt sind, die zur Hintereinanderschaltung der Bohrungen 16 über in Fig.2 gestrichelt angedeutete Leitungen oder Schläuche 17a dienen. Die Kühlflüssigkeit tritt beispielsweise gemäß Pfeil E ein und gemäß Pfeil A aus.

Der Kühlsockel 13 besteht z.B. aus Kupfer oder Aluminium, während der Deckel 12 beispielsweise aus Kunststoff und das Rohrgehäuse 9 z.B, aus Aluminium bestehen.

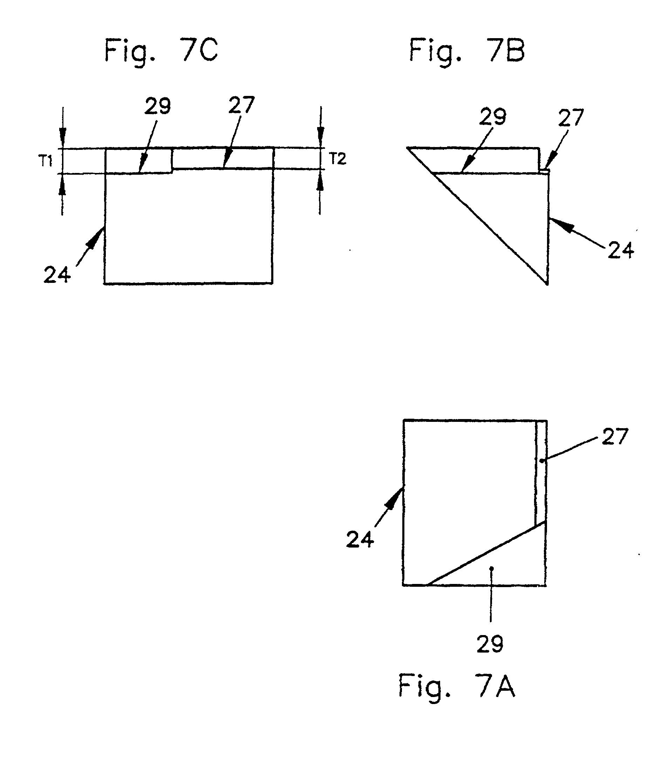

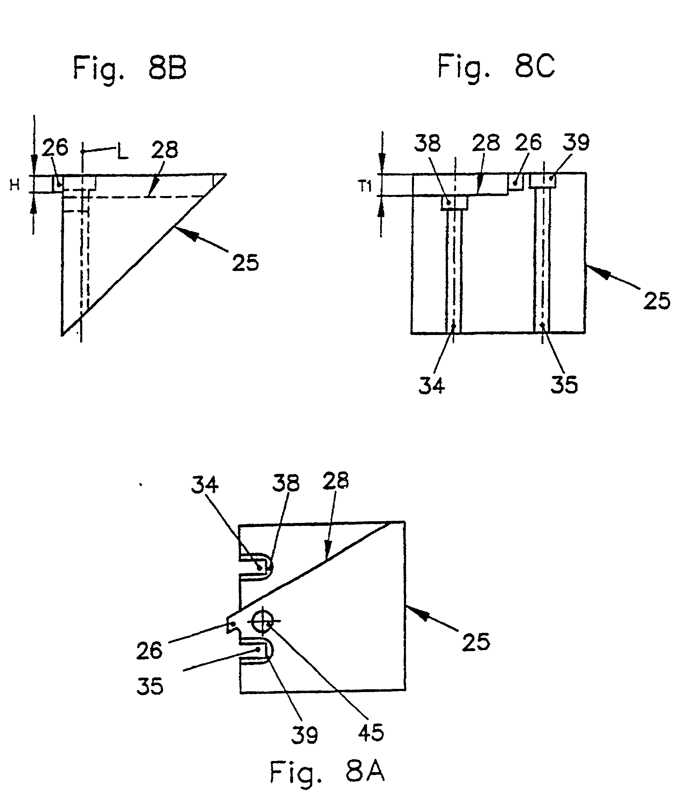

Von der Basis des Kühlsockels 13 erstreckt sich nach oben ein außen allgemein zylindrischer Körper 19, der zur Aufnahme von Peltierelementen 18, z.B. den unter der Bezeichnung Melcor Thermoelectrics 2 2 SC 055 045-127-63 im Handel erhältlichen Peltierelementen, dient und an der Innenwand des Rohrgehäuses 9 anliegt. Der Körper 19 weist mittig einen V-förmigen Einschnitt 20 mit einem Scheitelwinkel von 90° auf, so daß beidseitig der Mittellinie L (s. Fig.2) zwei Auflageflächen 21 für die Peltierelemente 18 definiert werden, wobei an den inneren, einander benachbarten Enden der Auflageflächen 21 hochstehende Anschläge 22, 23 für die Peltierelemente 18 vorgesehen sind. Beim dargestellten Ausführungsbeispiel sind jeweils zwei Blöcke von Peltierelementen 18 übereinander gestapelt auf den Auflageflächen 20 angeordnet. Die Wärmeabgebende oder "warme" Seite der Peltierelemente 18 liegt hierbei an den beiden Auflageflächen 21 an, wogegen die Wärmeaufnehmende oder "kalte" Seite der Peltierelemente 18 an zwei Kühlbacken 24, 25 anliegt, welche die Peltierelemente 18 in ihrer Lage fixieren und deren Form im Detail aus den Fig.7A bis 7C und 8A bis 8C ersichtlich ist.

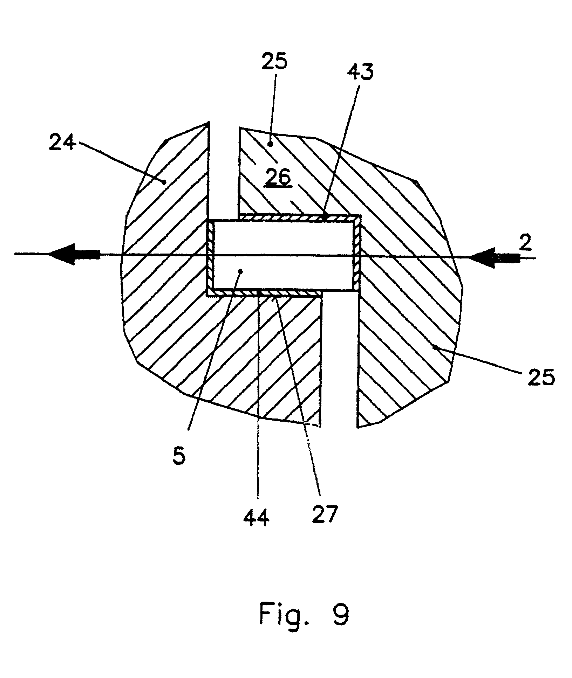

Wie insbesondere den Vorderansichten nach Fig.7B und 8B zu entnehmen ist, sind die Kühlbacken 24 und 25 allgemein keilförmig, mit einem Seitenwinkel von beispielsweise 45°, ausgebildet, so daß sie im montierten Zustand den V-förmigen Einschnitt mit dem Scheitelwinkel von 90° des Körpers 19 ausfüllen. Die in Fig.2 rechts der Mittellinie L angeordnete Kühlbacke 25 weist einen Nasenfortsatz 26 (s. Fig.8B) auf, der die links der Mittellinie L angeordnete Kühlbacke 24 übergreift und mit seiner Unterseite am Kristall 5 (s. außer Fig.2 und 3 auch Fig.9) anliegt, der in einer abgestuften Ausnehmung 27 der Kühlbacke 24 aufliegt (s. Fig.7B). Der Kristall 5 hat die Form eines Parallelepipeds, dessen optische Hauptachse parallel zur Mittellinie L ausgerichtet ist, und dessen Endflächen einen Winkel von z.B. ca. 60° zur Hauptachse einnehmen.

Aus der Draufsicht auf die Kühlbacke 25 nach Fig.8A ist ersichtlich, daß der auf dem Kristall 5 aufliegende Nasenfortsatz 26 ebenfalls schräg unter einem Winkel von 60° verläuft, wobei in Fortsetzung der in Fig.8A oberen Kante des Nasenfortsatzes 26 die Kühlbacke 25 eine abgestufte Ausnehmung 28 aufweist, deren Grenzfläche ebenfalls unter einem Winkel von 60° zur Mittellinie L verläuft.

In gleicher Weise weist die Kühlbacke 24 ebenfalls - in gedachter Fortsetzung des Nasenfortsatzes 26, s. auch Fig.2 und Fig. 7A - eine abgestufte Ausnehmung 29 auf, die ebenfalls schräg zur Mittellinie L unter einem Winkel von 60° verläuft.

Die Tiefe T₁ der Abstufung 28 in der Kühlbacke 25 und der Abstufung 29 in der Kühlbacke 24 ist gleich groß, aber größer als die Tiefe T₂ der Abstufung 27 in der Kühlbacke 24. Die Höhe H des Nasenfortsatzes 26 entspricht der Tiefe T₂ der Abstufung 27, vermindert um die Dicke des Kristalls 5.

Somit wird durch die abgestuften Ausnehmungen 28, 29 der Kühlbacken 25, 24 ein freier Raum für den jeweiligen Laserstrahl 2 (s. Fig.2) geschaffen, der über die freiliegenden Endflächen des Kristalls 5 in diesen ein- und aus diesem austreten kann.

Für den Durchtritt des Laserstrahls 2 sind am Rohrgehäuse 9 des Behälters 8 auf gegenüberliegenden Seiten Rohrstutzen 30, 31 angebracht, die an ihren äußeren Enden mit Fenstern 32, 33 abgeschlossen sind, wobei die Fenster 32, 33 unter einem Winkel entsprechend den Brewsterwinkel (z.B. 56°) relativ zur Hauptachse des Laserstrahls 2 angebracht sind, um Reflexionen auszuschalten.

Die etwas größere Kühlbacke 25 weist zwei zur Mittellinie L parallel verlaufende Nuten oder Einfräsungen 34, 35 auf, die zur Aufnahme von Befestigungsschrauben 36, 37 dienen, wobei die Köpfe der Schrauben 36, 37 in Langloch-förmigen Ansenkungen 38, 39 in der Kühlbacke 25 versenkt angeordnet sind. Die Enden der Schrauben 36, 37 sind in Gewindesackbohrungen 40 im Kühlsockel 13 eingeschraubt (s. Fig.2).

Zur Evakuierung des Behälters 8 ist am Rohrgehäuse 9 ein nach außen abgewinkelter Rohranschluß 41 vorgesehen. Über eine ebenfalls im Rohrgehäuse 9 angebrachte Kabeldurchführung oder einen vakuumdichten Anschlußstecker 42 erfolgt die Stromversorgung für die Peltierelemente 18. Der Evakuier-Rohranschluß 41 kann z.B. nach dem Evakuieren dicht verschlossen werden. Falls die Dichtheit des gekapselten Behälters 8 insgesamt nicht über längere Zeiträume aufrechterhalten werden kann, wobei der optische Verstärker weiter in Betrieb ist, so kann auch zwischendurch immer wieder eine an den Rohranschluß 41 angeschlossene Pumpe (nicht gezeigt) in Betrieb gesetzt werden, um den Behälter 8 - beispielsweise auf einen Druck von einigen 10 mbar - zu evakuieren.

Wie aus der Detaildarstellung nach Fig.9 hervorgeht, ist der Kristall 5 über Folien 43, 44 aus Indium zwischen den abgestuften Ausnehmungen 28, 29 bzw. dem Nasenfortsatz 36 der beiden Kühlbacken 24, 25 eingebettet, wodurch ein guter Wärmeübergang zwischen dem Kristall 5 und den Kühlbacken 24, 25 resultiert.

Anstelle einer Evakuierung des Behälters 8 könnte auch eine Bestückung (d.h. Anbringung der Peltierelemente und des Laserkristalls) in einem Reinraum erfolgen, wonach der Behälter 8 unter Anbringung einer an sich bekannten Trocknungssubstanz, wie Silikagel, beispielsweise neben den Kühlbacken 24, 25, dicht verschlossen wird. Dadurch wird ebenfalls das Absetzen von Partikeln und Kondenswassertröpfchen am Kristall 5 verhindert.

Eine modifizierte Bauform der Kühlvorrichtung könnte weiters auch darin bestehen, den Kristall 5 sandwichartig zwischen oberen und unteren Peltierelementen anzubringen, an deren äußeren, d.h. oberen bzw. unteren, vom Kristall 5 abgewandten Seiten je ein - z.B. plattenförmiger - Kühlsockel anliegt.

Es ist auch möglich und vielfach zweckmäßig, die Temperatur des Kristalls 5 im Betrieb in an sich bekannter Weise zumindest zu überwachen, vorzugsweise zu regeln; zu diesem Zweck kann in einer der Kühlbacken, z.B. 25, ein Thermofühler eingesetzt werden (nicht dargestellt) der mit einem Temperatur-Überwachungs- oder -Regel-Schaltkreis verbunden wird. In Fig.8A ist eine Bohrung 45 gezeigt, in die ein solcher, an sich herkömmlicher Temperaturfühler eingesetzt werden kann.

## Patentansprüche

1. Kühlvorrichtung (7) mit Peltierelementen (18) für einen thermisch hoch belasteten optischen Kristall bzw. Laserkristall (5), von dem Laserstrahlen (2), insbesondere Laserpulse, erhalten werden, z.B. für den Laserkristall eines optischen Verstärkers oder Oszillators, dadurch gekennzeichnet, daß der Kristall (5) zusammen mit den zu seiner Kühlung vorgesehenen Peltierelementen (18) in einem gekapselten Behälter (8) untergebracht ist, daß das Innere des Behälters (8) evakuiert und/oder mittels einer Trocknungssubstanz trocken gehalten ist, und daß der Behälter (8) zumindest ein Brewster-Fenster (32, 33) für den Durchtritt der Laserstrahlen (2) aufweist, das unter einem Winkel entsprechend dem Brewsterwinkel relativ zur optischen Achse angebracht ist.

2. Kühlvorrichtung nach Anspruch 1, dadurch gekennzeichnet, daß die Peltierelemente (18) gestapelt vorgesehen sind.

3. Kühlvorrichtung nach Anspruch 1 oder 2, dadurch gekennzeichnet, daß der Kristall (5) zwischen gut wärmeleitenden Kühlbacken (24, 25) gehalten ist, an denen die Peltierelemente (18) anliegen.

4. Kühlvorrichtung nach Anspruch 3, dadurch gekennzeichnet, daß die Kühlbacken (24, 25) den Kristall (5) an vier Seiten formschlüssig umgreifen und festhalten.

5. Kühlvorrichtung nach Anspruch 3 oder 4, dadurch gekennzeichnet, daß eine (35) von zwei an gegenüberliegenden Seiten am Kristall (5) anliegenden Kühlbacken (24, 25) einen den auf der anderen Kühlbacke (24) aufliegenden Kristall (5) übergreifenden Nasenfortsatz (26) aufweist und die Kühlbacken in Laserstrahlrichtung vor bzw. hinter dem Kristall (5) mit Ausnehmungen (28, 29) für den Durchlaß der Laserstrahlen (2) versehen sind.

6. Kühlvorrichtung nach einem der Ansprüche 3 bis 5, dadurch gekennzeichnet, daß die Peltierelemente (18) an der von den Kühlbacken (24, 25) abgewandten warmen Seite an einem Kühlsockel (13) anliegen.

7. Kühlvorrichtung nach Anspruch 6, dadurch gekennzeichnet, daß der Kühlsockel (13) flüssigkeitsgekühlt ist.

8. Kühlvorrichtung nach Anspruch 6 oder 7, dadurch gekennzeichnet, daß der Kühlsockel (13) durch einen allgemein zylindrischen Körper (19) mit einem V-förmigen Einschnitt (20) an einer Stirnseite gebildet ist, der die Peltierelemente (18) sowie die Kühlbacken (24, 25) mit dem Kristall (5) aufnimmt.

9. Kühlvorrichtung nach Anspruch 8, dadurch gekennzeichnet, daß der V-förmige Einschnitt (20) einen Scheitelwinkel von 90° aufweist.

10. Kühlvorrichtung nach Anspruch 8 oder 9, dadurch gekennzeichnet, daß der V-förmige Einschnitt (20) schräge Auflageflächen (21) für die Peltierelemente (18) definiert und an den inneren, einander benachbarten Enden der Auflageflächen (21) von diesen hochstehende Anschläge (22, 23) für die Peltierelemente (18) vorgesehen sind.

11. Kühlvorrichtung nach einem der Ansprüche 1 bis 10, dadurch gekennzeichnet, daß der Behälter (8) ein mit einem Deckel (12) verschlossenes Rohrgehäuse (9) aufweist.

12. Kühlvorrichtung nach einem der Ansprüche 6 bis 10 und nach Anspruch 11, dadurch gekennzeichnet, daß der Kühlsockel (13) an seiner von den Peltierelementen (18) abgewandten Stirnseite mit einem Flansch (13a) versehen ist, mit dem das Rohrgehäuse (9) dicht verbunden ist.

13. Kühlvorrichtung nach Anspruch 12, dadurch gekennzeichnet, daß der Kühlsockel (13) im Bereich des Flansches (13a) mit Bohrungen (15) für den Durchfluß der Kühlflüssigkeit versehen ist.

14. Kühlvorrichtung nach einem der Ansprüche 1 bis 13, dadurch gekennzeichnet, daß der gekapselte Behälter (8) vorzugsweise an einander gegenüberliegenden Seiten mit (je) einem von ihm abstehenden, dicht angebrachten Rohrstutzen (30, 31) versehen ist, der an seinem äußeren Ende mit dem Fenster (32, 33) für den Durchtritt der Laserstrahlen (2) abgeschlossen ist.

15. Laservorrichtung mit einem thermisch hoch belasteten optischen Kristall bzw. Laserkristall (5) und mit einer Kühlvorrichtung (7) nach einem der Ansprüche 1 bis 14.

## Claims

1. A cooling device (7) comprising Peltier elements (18) for a thermally highly loaded optical crystal, or laser crystal (5), respectively, from which laser beams (2), in particular laser pulses, are obtained, e.g. for the laser crystal of an optical amplifier or oscillator, characterized in that the crystal (5), together with the Peltier elements (18) provided for its cooling, is housed in an encasing container (8), that the interior of the container (8) is evacuated and/or kept dry by means of a desiccant, and that the container (8) comprises at least one Brewster window (32, 33) for the passage of the laser beams (2) which is arranged under an angle relative to the optical axis which corresponds to the Brewster angle.

2. A cooling device according to claim 1, characterized in that the Peltier elements (18) are provided in stacked manner.

3. A cooling device according to claim 1 or 2, characterized in that the crystal (5) is held between cooling jaws (24, 25) of good thermal conductivity, against which the Peltier elements (18) rest.

4. A cooling device according to claim 3, characterized in that the cooling jaws (24, 25) positively embrace and retain the crystal (5) at four sides thereof.

5. A cooling device according to claim 3 or 4, characterized in that one (25) of two cooling jaws (24, 25) engaging the crystal (5) at opposites sides thereof has a nose projection (26) extending over the crystal (5) resting on the other cooling jaw (24) and the cooling jaws are provided with recesses (28, 29) in front of or behind the crystal (5), respectively, in the direction of the laser beams for the laser beams (2) to pass therethrough.

6. A cooling device according to any one of claims 3 to 5, characterized in that the Peltier elements (18) on the warm side facing away from the cooling jaws (24, 25) engage a cooling pedestal (13).

7. A cooling device according to claim 6, characterized in that the cooling pedestal (13) is liquid-cooled.

8. A cooling device according to claim 6 or 7, characterized in that the cooling pedestal (13) is comprised by a generally cylindrical body (19) having a V-shaped recess (20) at an end side which accommodates the Peltier elements (18) as well as the cooling jaws (24, 25) with the crystal (5).

9. A cooling device according to claim 8, characterized in that the V-shaped recess (20) comprises an apex angle of 90°.

10. A cooling device according to claim 8 or 9, characterized in that the V-shaped recess (20) defines oblique resting surfaces (21) for the Peltier elements (18) and stops (22, 23) for the Peltier elements (18) are provided at the inner, adjacent ends of the resting surfaces (21), which abutments project upwardly from the resting surfaces.

11. A cooling device according to any one of claims 1 to 10, characterized in that the container (8) comprises a tubular casing (9) closed by a lid (12).

12. A cooling device according to any one of claims 6 to 10 and according to claim 11, characterized in that the cooling pedestal (13) at its end side facing away from the Peltier elements (18) is provided with a flange (13a) with which the tubular casing (9) is tightly connected.

13. A cooling device according to claim 12, characterized in that the cooling pedestal (13) is provided with bores (15) for the passage of cooling liquid in the region of the flange (13a).

14. A cooling device according to any one of claims 1 to 13, characterized in that the encasing container (8), preferably at oppositely arranged sides thereof, is provided with a (respective) projecting, tightly attached pipe socket (30, 31) which at its outer end is closed by the window (32, 33) for the passage of the laser beams (2).

15. A laser arrangement comprising a thermally highly loaded optical crystal, or laser crystal (5), respectively, and a cooling device (7) according to any one of claims 1 to 14.

## Revendications

1. Dispositif de refroidissement (7) comportant des éléments Peltier (18) pour un cristal optique ou un cristal laser (5) fortement chargé thermiquement, qui produit des faisceaux laser (2), notamment des impulsions laser, par exemple pour le cristal laser d'un amplificateur optique ou d'un oscillateur optique, caractérisé en ce que le cristal (5) est logé, conjointement avec les éléments Peltier (18) prévus pour son refroidissement, dans un récipient encapsulé (8), qu'un vide est établi à l'intérieur du récipient (8) et/ou que l'intérieur du récipient est maintenu à sec à l'aide d'une substance de dessication, et que le récipient (8) comporte au moins une fenêtre de Brewster (32, 33) pour le passage des faisceaux laser (2), qui est disposée sous un angle correspondant à l'angle de Brewster par rapport à l'axe optique.

2. Dispositif de refroidissement selon la revendication 1, caractérisé en ce que les éléments Peltier (18) sont prévus à l'état empilé.

3. Dispositif de refroidissement selon la revendication 1 ou 2, caractérisé en ce que le cristal (5) est maintenu entre des mâchoires de refroidissement (24, 25), qui établissent une bonne conduction de chaleur et contre lesquels sont appliqués les éléments Peltier (18).

4. Dispositif de refroidissement selon la revendication 3, caractérisé en ce que les mâchoires de refroidissement (24, 25) entourent et retiennent fermement le cristal (5), selon une liaison par formes complémentaires, sur quatre côtés.

5. Dispositif de refroidissement selon la revendication 3 ou 4, caractérisé en ce que l'une (25) de deux mâchoires de refroidissement (24, 25), qui s'appliquent au niveau de côtés opposés sur le cristal (5), possède un prolongement en forme de nez (26) qui s'engage au-dessus du cristal (5) appliqué contre l'autre mâchoire de refroidissement (24) et que les mâchoires de refroidissement comportent dans la direction du faisceau laser, en amont ou en aval du cristal (5) , des évidements (28, 29) pour le passage des faisceaux laser (2).

6. Dispositif de refroidissement selon l'une des revendications 3 à 5, caractérisé en ce que les éléments Peltier (18) s'appliquent contre un socle de refroidissement (13) sur le côté chaud situé à l'opposé des mâchoires de refroidissement (24, 25).

7. Dispositif de refroidissement selon la revendication 6, caractérisé en ce que le socle de refroidissement (13) est refroidi par un liquide.

8. Dispositif de refroidissement selon la revendication 6 ou 7, caractérisé en ce que le socle de refroidissement (13) est formé par un corps de forme générale cylindrique (19) qui possède une encoche en forme de V (20) sur une face frontale et qui loge les éléments Peltier (18) ainsi que des mâchoires de refroidissement (24, 25) avec le cristal (5).

9. Dispositif de refroidissement selon la revendication 8, caractérisé en ce que l'encoche en forme de V (20) possède un angle au sommet de 90°.

10. Dispositif de refroidissement selon les revendications 8 et 9, caractérisé en ce que l'encoche en forme de V (20) définit des surfaces obliques d'application (21) pour les éléments Peltier (18) et que sur les extrémités intérieures, qui sont réciproquement voisines, des surfaces d'application (21) sont prévues des butées (22, 23) qui font saillie vers le haut à partir de ces surfaces et sont prévues pour les éléments Peltier (18).

11. Dispositif de refroidissement selon l'une des revendications 1 à 10, caractérisé en ce que le récipient (8) possède un boîtier tubulaire (9) fermé par un couvercle (12).

12. Dispositif de refroidissement selon l'une des revendications 6 à 10 et selon la revendication 11, caractérisé en ce que le socle de refroidissement (13) comporte, sur sa face frontale tournée à l'opposé des éléments Peltier (18), une bride (13a), à laquelle est relié d'une manière étanche le boîtier tubulaire (9).

13. Dispositif de refroidissement selon la revendication 12, caractérisé en ce que le socle de refroidissement (13) comporte, dans la zone de la bride (13a), des perçages (15) pour le passage du liquide de refroidissement.

14. Dispositif de refroidissement selon l'une des revendications 1 à 13, caractérisé en ce que le récipient encapsulé (8) comporte, de préférence sur des côtés réciproquement opposés, un embout tubulaire (respectif) (30, 31) qui fait saillie à partir du récipient, est monté d'une manière étanche et se termine, au niveau de son extrémité extérieure, par la fenêtre (32, 33) pour le passage des faisceaux laser (2).

15. Dispositif laser comportant un cristal ou un cristal laser optique (5) fortement chargé thermiquement et un dispositif de refroidissement (7), selon l'une des revendications 1 à 14.
